# EUROPEAN PATENT APPLICATION

(11) **EP 2 681 999 A2**
(43) Date of publication of application: **08.01.2014**
(21) Application number: 13185699.9
(22) Date of filing: 29.12.2010
(51) Int. Cl.: A23B 4/01, A23B 4/015, A23L 1/025, A23L 1/325, A22C 25/16, A22B 3/00

(54) **Processing of fish**

(30) Priority: 29.12.2009 DK 200901382
(62) Divisional of application: 10801148.7
(71) Applicant: Marel Iceland EHF, 210 Gardabaer (IS)
(72) Inventor: Hallvardsson, Kristjan, 200 Kopavogur (IS); Birgisson, Rúnar, 112 Reykjavik (IS)
(74) Representative: Olesen, Kaj

(57) **Abstract**

Method of processing of fish, for example salmon and related species, said method comprising the steps of
- providing a live fish,
- stunning the fish,
- slaughtering the fish subsequent to the stunning of the fish,
- subjecting the slaughtered fish or part of the slaughtered fish to an electrical stimulation prior to at least a further processing step of the slaughtered fish or part of the slaughtered fish, and
- wherein said at least one further processing step comprises the step of removing pin-bones from the slaughtered fish or part of the slaughtered fish.

By subjecting the slaughtered fish or part of the slaughtered fish to the electrical stimulation it is achieved that the pin-bones can be removed without waiting for the normal rigor process to be concluded and the normal post-rigor state to be reached and further it is achieved that the pin-bones can still be removed satisfactorily, e.g. without breaking when being pulled etc., since the bonding of the bones are relieved by the electrical stimulation.

## Description

### Field of the invention

The invention relates to a method of processing of fish, for example salmon and related species, which method comprises the steps of
- providing a live fish,
- slaughtering the fish and
- performing at least one further processing step.

### Background of the invention

The invention is related to the processing of fish, e.g. the processing of fish in connection with slaughtering and/or after slaughtering and/or the processing of fillets of slaughtered fish. The invention relates to a method for facilitating the processing of fish after slaughtering, whereby an improved processing is achieved. In particular, the invention is related to the process of removing bones, e.g. pin-bones, nerve bones, radial bones, etc. from fish and fish fillets. In the following the invention will in general be explained with reference to the removal of pin-bones, but it will be understood that the invention may be used in connection with fish bones in general.

The process of removing bones from fish has gained considerable importance in recent years since the quality of the fish product and thereby also the price of the fish product is increased by removing the pin-bones and since there is an increased demand for fish products where bones, e.g. pin-bones have been removed or substantially removed from the product. This is for example the case in connection with salmon and related species, e.g. trout. The bones commonly referred to as pin-bones within this field are relatively thin and fine bones, which are located intramuscularly, with a hard part connected to the dorsal vertebra, sticking approximately horizontally to either side with a softer part terminating near the skin of the fish. Thus, these bones tend to remain in the fish meat after filleting and the problem of removing these pin-bones has gained considerable interest.

Currently, the process of removing pin-bones is performed in the post-rigor state, since the pin bones are firmly bonded in the tissue of the fish after slaughtering. Further, during the rigor process muscle processes, e.g. opposing pull of the muscles leads to a compressing of the spaces between vertebrae in the fish, whereby the pin-bones are firmly bonded and difficult to remove. Therefore, it is commonly accepted that pre-rigor pin-boning as well as pin-boning during rigor mortis of e.g. salmon is not possible, e.g. because the pin-bones tend to break or, if removed, will extract some of the fish meat, thereby reducing the yield and the quality of the fish meat. During rigor mortis the energy in the muscles is gradually relieved, thereby making it easier to remove the pin-bones in the post-rigor state.

Therefore, it is current practice to remove pin-bones in a post-rigor state, i.e. after resolution of rigor. Thus, in accordance with current practice, the fish is either transported from the slaughtering plant as whole fish or fillets or it is stored in tubs the time it takes to go through rigor mortis and the whole fish is then filleted, pinboned, etc.

An example of such prior art pin-bone removal is disclosed in for example WO 92/12641 A1, wherein a method and an apparatus is described for removing fish bones from e.g. a salmon fish fillet by using a handheld apparatus comprising a rotatable roller or wheel and a counter-pressure device, which pinches a fish bone and extracts the fish bone by the rotation of the rotatable roller or wheel.

A further example of such a prior art apparatus is disclosed in WO 99/52375 A1, which relates to an apparatus for removing fish bones, in particular nerve bones from a filleted fish, which is forwarded by a conveyor. The apparatus comprises a bone extracting unit located above the conveyor, which bone extracting unit has a rotatable member that cooperates with a counter-pressure element to extract bones from the fish fillet, when it is passing on the conveyor. The bone extracting unit is movably suspended in order to adapt automatically to the surface contour of the fish.

WO 2008/020786 Al also addresses the problem of being able to effectively remove bones, including pin-bones from filleted fish, and the document also mentions the problem that it in most cases will be necessary to wait up to 48 hours before pin-bones can be securely removed, i.e. wait to the post-rigor condition has set in, where the flesh has loosened its grip of the bones sufficiently to allow a rapid and thereby economically rational pin-bone removal processing of the fish. According to this prior art document, the pin-bones are removed by using a power driven rotary drum having bone engagement means along the outer circumference of the drum, whereby the bones are gripped by the engagement means and pulled out from the fish by the rotation of the drum. The rotation of at least selected engagement means are temporarily slowed down when the selected engagement means encounter a bone pull-out force exceeding a predetermined maximum value, e.g. by using a slip-drive connection. The effect of this special arrangement - as disclosed in this prior art document - is that the bones are pulled out without breaking and that furthermore bone removal may be performed not only in the post-rigor condition but also in the pre-rigor condition and even in the actual or full rigor condition of the fish.

Further, EP 1 753 295 B1 discloses a device and method for the removal of pin-bones prior to or during rigor mortis of the fish. This prior art document addresses the problem that when using conventional methods and devices, it is necessary to wait app. 4 days - according to his document - before the post-rigor condition is arrived at, where pin-bones can be removed with a satisfactory result, and that this has the disadvantage that the fish at this point does not have the desired freshness. According to this prior art document, the pin-bones are detached from the fish and pulled out of it by applying a vacuum, i.e. by using a suction element, which can be a handheld device or which is suggested to be used in an automated arrangement, where a camera unit is used for recording specific data of each fish fillet and where by means of an evaluating unit the exact position of the pin-bones in the fish fillet is determined. Thus, it is apparent that this prior art arrangement is time-consuming and, if automated, requires relatively advanced camera and control equipment.

WO 01/84941 A1 discloses a method of producing raw fish meat products by substantially removing the pin-bones from the fish before resolution of rigor, including pre-rigor and in-rigor in order to provide raw fish meat products having improved freshness factors relative to conventional raw fish meat products made from stored fish at the post-rigor state, e.g. fish, where the pin-bones are removed in the post-rigor state. However, in order to be able to remove the pin-bones prior to resolution of rigor, it is described that the pin-bones may be removed by methods including cutting the fillet longitudinal, i.e. making separate pieces of meat substantially without pin-bones. Further, it is disclosed that pin-bones may be removed by a V-shaped cut, by cutting out each pin-bone separately, and by "shooting" out pin-bones by pistol, water-jet or air, thus presumably giving rise to a certain amount of waste of fish meat. In one embodiment slices of meat comprising the pin-bones are excised from the fish meat parts in order to obtain boneless raw fish meat product. In another embodiment according to this prior art, pin-bones may be removed by cutting the fish meat close to the pin-bones, resulting in a fillet substantially free from pin-bones and a fillet containing pin-bones. According to the document, when the cut is made in such a manner that the separation process results in one of the fillets exposing the pin-bones in a line close to the rind, the pin-bones can be removed from this fillet by conventional methods, e.g. dragging or pulling the row of pin-bones from the fish meat and thereby only removing a minimum of fish meat with pin-bones. Thus, it is apparent that this prior art teaches that in order to be able to remove pin-bones prior to the post-rigor state of the fish, methods are used whereby the pin-bones are removed together with a certain amount of fish meat, e.g. by cutting or excising pieces comprising the pin-bones or dragging pin-bones from the fish together with a certain, although referred to as minimum, amount of fish meat.

As mentioned in connection with the prior art documents EP 1 753 295 B1 and WO 01/84941 A1, the freshness of the fish meat is an important parameter, when supplying fish fillets and fish meat. The freshness of the fish meat is also mentioned in e.g. JP 2004-159539 A, where the problem of providing fresh cultured fish is addressed, e.g. in order to bring the fish to a wholesale market before the fish stiffens, and where the solution of retarding the beginning of rigor mortis is used, which is achieved by feeding the cultured fish a rigor retarding agent prior to shipping. However, this document is not related to the problem of removing pin-bones.

Thus, as it is apparent from the above cited prior art, the freshness of fish meat, when it is supplied with pin-bones removed, is an important issue, and it is apparent that efforts have been made within the field to provide methods and devices, by means of which the pin-bones can be removed at an earlier stage than at the post-rigor stage, thereby improving freshness of the supplied products. However, this is related with various disadvantages as also mentioned above. Further, as it is apparent from the above cited Japanese patent document, efforts have been made within the fish industry to be capable of delivering fish at a pre-rigor state by retarding the onset of rigor, but the problem of removing pin-bones has not been addressed in this connection and is thus not solved thereby.

Furthermore, the use of electrical stimulation in connection with fish and shellfish is disclosed in the Japanese document JP 2023828 A, wherein it is suggested to apply a DC or AC voltage to the fish or shellfish in order to soften the meat. In this document it is mentioned that electrical stimulation in the form of a DC or an AC voltage in the range of 0.10 - 50V can be applied to live fish and shellfish just after landing or after instant killing, in the range of 50 - 600V according to further examples and in the range of 600 - 4000V for fish bodies in the form of fillets. The object of the method described in this document is to soften the texture of the fish meat of fresh fish.

Furthermore, electrical stimulation of muscle tissue is described in EP 1 406 499 B 1 (corresponding to WO 03/007721 A2), which relates to a method for processing poultry, comprising the steps of supplying live poultry, stunning the live poultry in a stunning device, placing the stunned poultry into product carriers advanced along a conveyor, killing the poultry and removing the feathers from the dead poultry in a plucking device. Downstream of the plucking device, the poultry is exposed to an electrical stimulation, an electrical voltage being applied across the carcass of the poultry. In this document it is described that tenderness is a characteristic of meat products which is substantially determined by the time after the death of an animal at which the meat is removed from the bones and that if the meat is removed shortly after the death of a slaughter bird to be processed, the outcome is a tough product. It is explained that the culmination in a tough end product, when the meat is removed from the bones too soon after death, finds its origin in that as long as a muscle remains connected to the skeleton of the poultry, it is not possible for the muscle to contract unrestricted. A muscle contraction after the death of the slaughtered animal is provoked by the so-called Rigor Mortis (RM). Shortly after the death of an animal, a certain amount of energy is still present (stored) in its muscles. If a muscle is cut away from the skeleton before RM has set in, then the muscle will severely contract under the influence of this residual energy still present in the muscle in question and the muscle will stiffen. The energy supply still present in the muscle is substantially present in the form of glycogen, which, via intermediate products such as glucose, is ultimately converted into lactic acid and hence the pH in the muscles will fall. As a result of this muscle stiffening, a piece of meat, after having been prepared in a normal manner, will have poor tenderness, which is undesirable with a view to preventing unwanted toughness. As described in this document, an electrical stimulation of muscle tissue of the poultry is performed by applying an electric voltage across a slaughtered bird. As a result of this stimulation, the muscles are agitated and incited to perform work. As work is performed by the muscles, the glycolysis process in the muscles of the slaughtered bird is accelerated. The glycogen still present in the muscle is ultimately converted, via intermediate products such as glucose, into lactic acid. The pH in the muscles thereby falls. Through the stimulation of the muscles, the energy supply is therefore more rapidly spent, the stimulated muscle enters sooner into RM and the hanging process will be accelerated. The meat can be cut from the bones sooner after death without consequent lack of tenderness having to be suffered as explained in this document.

Thus, EP 1 406 499 B1 is related to the problem of tenderness of meat of poultry in view of the processing of the poultry.

SU 786 957 B relates to a device for separating meat and bone raw material into fractions.

It is an object of the present invention to present a method of processing of fish, which provides improvements in comparison with the above-mentioned prior art methods relating to the processing of fish.

In particular, it is an object of the present invention to provide such a method, by means of which the problems related to the removal of pin-bones are relieved and in particular whereby it is made possible to remove pin-bones at a relatively early stage.

Further, it is an object to provide such a method, by means of which the pin-bones can be satisfactorily removed, thus providing fish products having a desired quality.

Thus, it is also an object of the invention to provide such a method, by means of which the pin-bones can be removed without breaking and by means of which it can be avoided to remove an intolerable amount of meat from the fish together with the pin-bones.

Even further, it is an object to provide such a method, by means of which fish products can be provided to the customers with a desired freshness.

These and other objects are achieved by the invention as explained in further detail in the following.

### Summary of the invention

The invention relates to a method of processing of fish, said method comprising the steps of
- providing a live fish,
- slaughtering the fish,
- subjecting the fish or part of the fish to an electrical stimulation prior to at least a further processing step of the fish or part of the fish, and
- wherein said at least one further processing step comprises the step of removing pin-bones from the fish or part of the fish.

By subjecting the fish to the electrical stimulation the aim is to get rid of the energy in the muscles and speed up the rigor time, which provides a number of advantages in connection with the processing of the fish and which allows the fish or the fish meat to be provided e.g. on the market, to the consumer, etc. with a higher degree of freshness as compared to the normal processing of fish, where usually the resolution of rigor mortis has to be waited for, before the fish or fish meat can be processed and supplied e.g. on the market, to the consumer, etc. Furthermore, it has also been shown that by providing the electrical stimulation at least some of the protein chains that are holding the bones, e.g. bonding the muscle tissue to the bones, breaks down, which also provides advantages as regards the subsequent processing of the fish.

Hereby it is achieved that the pin-bones can be removed without waiting for the normal rigor process to be concluded and the normal post-rigor state to be reached and further it is achieved that the pin-bones can still be removed satisfactorily, e.g. without breaking when being pulled and/or without being pulled out together with attached fish meat, etc., since as explained above the bonding of the bones are relieved by the electrical stimulation and the energy in the muscles is released as well.

Further, it is also in general achieved that the rigor time can be controlled and shortened and that it can be ensured that the fish is not in a rigor state when it enters the market.

Even further, it is noted that during rigor mortis enzymatic and bacterial reactions occur in the fish, which begin to deteriorate the fish. Thus, as the rigor process is shortened by the invention and since the fish can enter the market without having to wait for the resolution of the rigor mortis, these deteriorating processes are reduced in time. This aspect also adds to the freshness of the fish products that are being provided by the method according to the invention.

It is emphasized that by the term "slaughter", "slaughtering", etc. in connection with the present application it is understood that the term includes at least the step of killing a fish and that only such a step may be included. However, further steps, operations etc. such as bleeding, decapitation, etc. may be included as well. Similarly, it will be understood that the term "slaughtered fish" in this connection means a fish that has been killed but that further steps may have been performed, such as e.g. bleeding.

It should be mentioned that the electrical stimulation of the slaughtered fish can be performed when it is taken out of water or while it is in water, which will be apparent to a skilled person.

Preferably, said at least one further processing step may comprise the step of filleting the fish, which is performed subsequent to the step of subjecting the fish to an electrical stimulation,

Thus, the fish can be filleted relatively quickly after slaughtering.

Advantageously, the filleting can take place prior to a pin-boning step.

Advantageously, said step of subjecting the fish or part of the fish to an electrical stimulation may be performed within a predetermined time period T_{S} after slaughtering the fish.

Hereby, it can be ensured that the electrical stimulation leads to the desired result, e.g. the relieving of the muscle energy and the break-down of bonding protein chains, which has shown to result in a de facto shortening of the rigor time. Advantageously, said step of subjecting the fish or part of the fish to an electrical stimulation may be performed while the fish is in the bleeding process after being slaughtered and/or after a gutting process of the fish has taken place.

Hereby, it can be ensured that the electrical stimulation leads to the desired result, e.g. the relieving of the muscle energy and the break-down of bonding protein chains, which has shown to result in a de facto shortening of the rigor time.

Preferably, said method may comprise one or more of the following processing steps: gutting, grading, filleting, trimming and packaging.

The sequence of the processing steps may be arranged in various manners, but in a preferred form the slaughtering is followed by the gutting and the electrical stimulation step, whereafter may follow grading, filleting, trimming, pin-boning and packaging. Further steps may be included.

According to a further advantageous embodiment, said method may further comprise the step of performing a bone detection process, for example an X-ray detection process, which is performed subsequent to or simultaneously with the step of removing pin-bones from the fish or part of the fish.

Hereby, it can be detected whether all pin-bones have been removed or whether pin-bone remains from broken pin-bones are present. Thus, the quality of the fish fillet or fish meat can be enhanced and/or checked.

Advantageously, said step of subjecting the fish or part of the fish to an electrical stimulation may comprise the use of one or more electrodes for applying the electrical stimulation to the fish or part of the fish, said one or more electrodes preferably being arranged in connection with a slaughtering process line.

As it will be apparent to a skilled person, different forms and varieties of electrodes may be used and likewise it will be apparent that a part of e.g. a slaughtering line conveyor or the like may serve as e.g. a ground, earth or common reference electrode.

According to a further advantageous embodiment, said step of subjecting the fish or part of the fish to an electrical stimulation may comprise the application of an electrical voltage (V) having a predetermined amplitude, frequency and/or form for one or more stimulation periods.

As it will be apparent to a person skilled within the art, the electrical stimulation may comprise the use of AC or DC voltages, one or more voltage pulses and variations thereof, e.g. also including voltage spikes or the like. Further, it will be apparent that the amplitudes, frequencies and/or time periods for e.g. pulses and/or rest periods with no voltages can be varied and can be adjustable in view of e.g. the species of fish, the weight of the fish, etc.

In connection herewith it should be mentioned that voltages mentioned in the following, e.g. amplitude values, RMS vales etc. are voltages applied to e.g. electrodes and not voltages actually applied to the fish or part of the fish, since the resistance between electrodes and the fish part is relatively high.

According to a still further advantageous embodiment, at least two stimulation periods may be involved, separated by a rest period.

Hereby, the relief of the biochemical energy in the muscles may be further enhanced.

According to a particular advantageous embodiment, said one or more stimulation periods may involve a plurality of burst stimulations applied to the fish or part of the fish, possibly separated by relaxation periods.

Preferably, said electrical voltage applied to the fish or part of the fish, e.g. within said plurality of burst stimulations, may comprise an alternating voltage, preferably within the interval of 10V to 250V, for example app. 100V and with a frequency within the range of 10Hz to 1kHz, for example 50Hz.

It is noted that the characteristics, e.g. the amplitude, the frequency etc., of said burst stimulations may vary e.g. from one stimulation period to the next or within each stimulation period. For example, the voltage may be increased from one stimulation period to the next or within each stimulation period.

Further, said electrical voltage applied to the fish or part of the fish, e.g. within said plurality of burst stimulations (B), may comprise a DC voltage, e.g. a pulsed DV voltage.

It is noted that the characteristics, e.g. the amplitude, of said burst stimulations may vary e.g. from one stimulation period to the next or within each stimulation period. For example, the voltage may be increased from one stimulation period to the next or within each stimulation period.

According to a particular advantageous embodiment, said processing may comprise a controlled cooling or chilling of the fish or part of the fish.

As mentioned the invention may preferably be used in connection with salmon, but the invention may also be applicable in connection with other fish species such as trout and char and other species that are related to salmon.

Furthermore, the method according to the invention can be applied to wild whitefish species such as cod, haddock, seethe, etc., which also has pin-bones stuck inside the flesh most of the time even though the fish is through rigor.

Even further, the method according to the invention can also be applied to farmed whitefish such as tilapia, pangangius, catfish, sea bass, sea bream.

It is also noted that when applying the method, e.g. by controlling stimulation periods, amplitudes, frequencies, pulse periods and/or other parameters, it is possible to control quality indicators such as gaping, texture, etc. of the fish meat products provided by the method.

A system for processing of fish, which is configured for performing a method according to any of the claims, comprises
- means for slaughtering of fish,
- means for subjecting the fish or part of the fish to an electrical stimulation of the slaughtered fish, and
- means for performing at least one further processing step of the fish, wherein said at least one further processing step comprises the step of removing pin-bones from the fish or part of the fish, which is performed subsequent to the step of subjecting the fish or part of the fish to an electrical stimulation.

It is noted that means used in connection with the method according to the present invention for removing pin-bones may be of any of the various types of pin-bone removers as commonly known in the field, cf. e.g. the examples of such methods, machinery and apparatus that are disclosed in the prior art documents that have been cited above, cf. e.g. WO 99/52375 A1, WO 92/12641 A1, WO 2008/020786 A1, EP 1 753 295 B1, etc. Thus, it will be understood that an extracting unit comprising for example a rotatable member or the like, which cooperates with a counter-element and is configured for gripping or pinching the end of a pin-bone and extracting the pin-bone can be used in connection with the invention, for example movably located above a conveyor, where a fillet is passing. Further, various embodiments and types may be used, including e.g. rotatable rollers or drums having bone engagement means, handheld extractor devices, pinching devices, manual or power operated devices, etc. The fish fillet may be located on a conveyor when the pin-boning is performed, with an extractor unit placed above the conveyor, or the fish fillet may be placed on a support with the extractor unit passing along the fillet. Other variations are possible, which will be apparent to a skilled person. Further, it should be mentioned that even manual removal may be performed in connection with the invention.

Further, as regards the slaughtering of the fish performed in connection with the invention it should be mentioned that this may be performed in various manners as it will be apparent to a person skilled in the art and by use of apparatus commonly used within the industry. Similar regards other processing steps that are commonly executed in connection with the processing of the fish.

Preferably, said means for subjecting the fish to an electrical stimulation of the slaughtered fish may comprise an electrode arrangement, arranged in connection with a fish slaughtering plant, and comprising e.g. electrode rails, current connections, etc. for applying stimulation signals to the fish.

According to a further advantageous embodiment the system may further include chilling means for stepwise controlling of the fish chilling, to a core temperature above 4°C between gutting and deboning, followed by a core temperature decrease after deboning to less than 2°C.

According to a further aspect, the invention relates to a method of processing of fish, said method comprising the steps of
- providing a live fish,
- slaughtering the fish,
- subjecting the fish or part of the fish to an electrical stimulation prior to at least a further processing step of the fish or part of the fish, wherein said step of subjecting the fish or part of the fish to an electrical stimulation comprises the use of one or more electrodes for applying a pulsed electrical stimulation to a part of the fish, and
- wherein said at least one further processing step comprises the step of removing pin-bones from the part of the fish.

### The figures

The invention will be explained in further detail below with reference to the figures of which
- Fig. 1: is a flowchart illustrating a first embodiment of a method according to the invention,
- Fig. 2: is a flowchart illustrating a further embodiment of a method according to the invention,
- Fig. 3: is a flowchart illustrating a modification of the first embodiment as shown in fig. 1, wherein further an x-ray detection step in included,
- Fig.4: illustrates a method of applying electrical stimulation by direct electrode contact,
- Fig. 5: shows a method of applying electrical stimulation in connection with a conveyor,
- Fig. 6: shows a method of applying electrical stimulation in connection with a conveying arrangement comprising baskets, product carriers or the like,
- Figs. 7a, 7b: shows a method of applying electrical stimulation in connection with a tumbler, e.g. a cooling tumbler for fish,
- Figs. 8a - 8h: illustrate various electrical stimulation signals, and
- Fig. 9: shows qualitative test results for salmon treated according to two different treatment schemes, compared with untreated salmon..

### Detailed description

A particular embodiment of a method according to the invention will be described in the following, where the processing of fish that are caught will be explained.

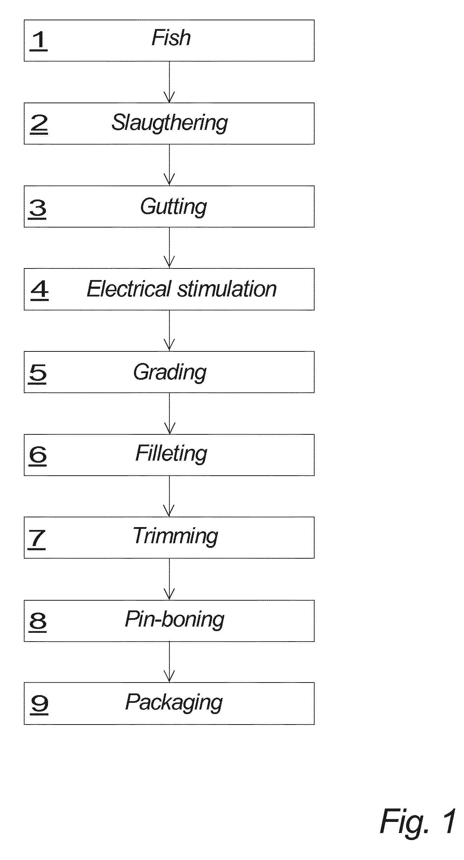

As illustrated in fig. 1 fish are provided 1, which fish may be wildfish or cultured fish that are caught or otherwise provided. After being caught the fish are slaughtered 2 and in connection herewith, e.g. immediately after and at least within a predetermined time period T_{S}, depending on e.g. the species and/or other parameters, the fish are subjected to an electrical stimulation 4, for example one by one, although it is also a possibility that a plurality of fish can be subjected to electrical stimulation simultaneously. As shown in fig. 1 the electrical stimulation 4 may be performed subsequent to the gutting 3 of the fish. In general, the electrical stimulation 4 may be performed while the fish is still in the bleeding process, after the bleeding process and as mentioned after the gutting 3.

It is noted that in connection with the slaughtering of the fish a stunning of the fish is normally performed prior to the actual slaughtering.

For example, the fish can be stunned by letting the fish stay in in water with CO2 content, e.g. in a water tank, in about ½ hour. After coming out of the water and killed manually with e.g. a knife and with bleeding initiated, the fish may subsequently be put into water for bleeding in about ½ hour. Subsequent to this, the guts may be taken out by machine. It is a further possibility that dry bleeding can be performed, i.e. when the bleeding takes place not in water.

Instead, the fish can be stunned by electrical stunning, e.g. by stunning the fish one by one just after taking them out of the water. This may be done manually or preferably automatically.

Further, a mechanical stunning can be performed instead, which may be performed by subjecting the fish to a blow to the head.

The electrical stimulation 4 can be performed in numerous manners, e.g. by using electrodes of different forms, shapes and materials and by using various stimulation forms, e.g. by applying different voltage levels, amplitudes, pulses, pulse trains, for one or more stimulation periods.

Further, it should be mentioned that the electrical stimulation can be administered to the fish, i.e. the slaughtered fish, when it is out of water as well as in water, which will be apparent from the examples disclosed in the following. For example, it is a possibility that the electrical stimulation can take place while the fish after slaughtering is bleeding in water. Further, the electrical stimulation can take place with the fish being moved in a tumbler, which is partially filled with water, an example of which will be described later on. Examples of the slaughtered fish being treated to electrical stimulation, while it is out of water will also be described in the following. Further variations will be apparent to a skilled person.

When the fish has been subjected to the electrical stimulation 4, energy in the muscles of the fish is more or less gradually released, whereby the compression in the muscle tissue is released and the bonding of e.g. pin-bones in the fish is also lessened, corresponding to the process that takes place during the rigor process. Furthermore, it has been shown that the electrical stimulation can initiate a process of breaking down some of the protein chains in the muscles, which also has the effect of lessening the bonding between the bones and the muscle tissue, whereby an overall effect is that a further processing of the fish, e.g. filleting 6 and subsequent pin-bone removal 8 can be performed effectively and with the desired quality relatively quickly after the slaughtering of the fish and that under no circumstances will it be necessary to wait e.g. 48 hours as mentioned in WO 2008/020786 Al before the rigor process has advanced sufficiently in order for the pin-boning to be performed satisfactorily.

As shown in fig. 1 a number of processing steps may be performed as under normal circumstances before and/or after the electrical stimulation 4, for example, but not limited to, gutting 3, which preferably is performed prior to electrical stimulation, grading 5, filleting 6 and trimming 7 of the fillets, whereafter the pin-boning process 8 can expediently be performed. Subsequent to this, packaging 9, transport, etc. of the fish product can be performed. Also, it is mentioned that in connection with the slaughtering and processing of the fish a cooling may preferably be performed, which for example may take place in a tumbler with a spiral to move the fish from one end to the other during the tumbling, which tumbler is filled partly with water, e.g. 50% filled with water.

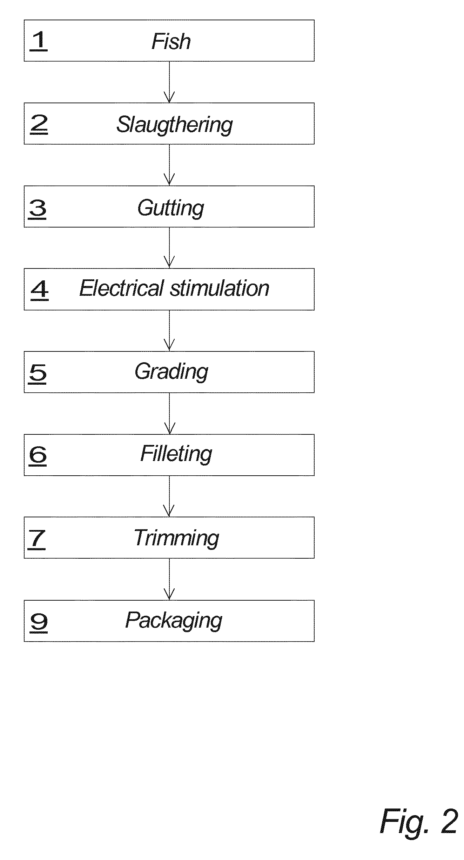

As shown in fig. 2 the method may be applied in circumstances where for example a pin-bone process is not necessary, and where the process after slaughtering 2, gutting 3 and electrical stimulation 4 comprises the steps of grading 5, filleting 6, trimming 7 and packaging 9, etc. Also here the method to electrically stimulate the fish directly after slaughtering while the fish is in bleeding process is used in order to get rid of the energy in the muscles, speed up the rigor time and also to break down some protein chains that are holding the bones. Thus, the rigor time is controlled (shortened) in order to make sure fish is not in rigor state when it enters the market and it is made possible to fillet the fish as post-rigor right after slaughtering.

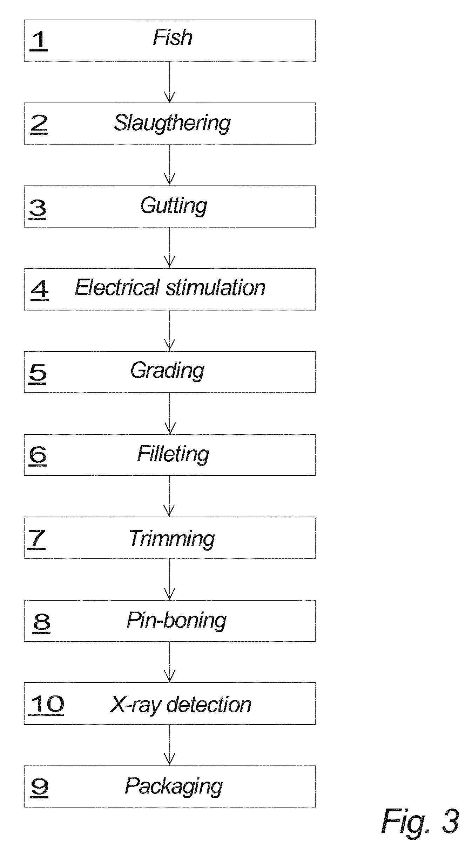

A further embodiment is illustrated by fig. 3, which corresponds to the embodiment shown in fig. 1, but wherein an optional x-ray bone detection step 10 is included, whereby the e.g. pin-bones can be detected. It is a further possibility that this x-ray bone detection step 10 can be used for controlling the efficiency of the pin-bone process, e.g. in order to detect whether bones or bone remnants have been left after the pin-boning process 8, in which case the x-ray bone detection step 10 may be applied subsequent to the pin-boning step 8. It will be understood that in case bones or bone remnants are detected, the particular fish or fish part may be subjected to a process, where the bones or bone remnants are removed, either manually or by an automated process (not shown in fig. 3) Other detection methods than x-ray detection may be used as well for detecting bones, e.g. pin-bones, or bone remnants..

The method according to the invention can as mentioned be used in connection with salmon, but can be applied to other fish species as well, e.g. trout and char, which are related species to salmon.

Further, the method can be used in connection with wild whitefish species such as cod, haddock, seithe and more, which also comprise pin-bones, which are stuck inside the flesh most of the time even though the fish is through rigor.

Furthermore, the method can be used in connection with farmed whitefish such as tilapia, pangangius, catfish, seabass, seabream, etc.

Also, it is noted that the electrical stimulation may be performed on a part of the fish, e.g. a fish fillet. Thus the filleting of the fish may be performed prior to the electrical stimulation step and the pin-boning step is performed subsequently.

By applying the method it is possible, e.g. by controlling stimulation periods, amplitudes, frequencies, pulse periods and/or other parameters, to control quality indicators such as gaping, texture, etc. of the fish meat products provided by the method.

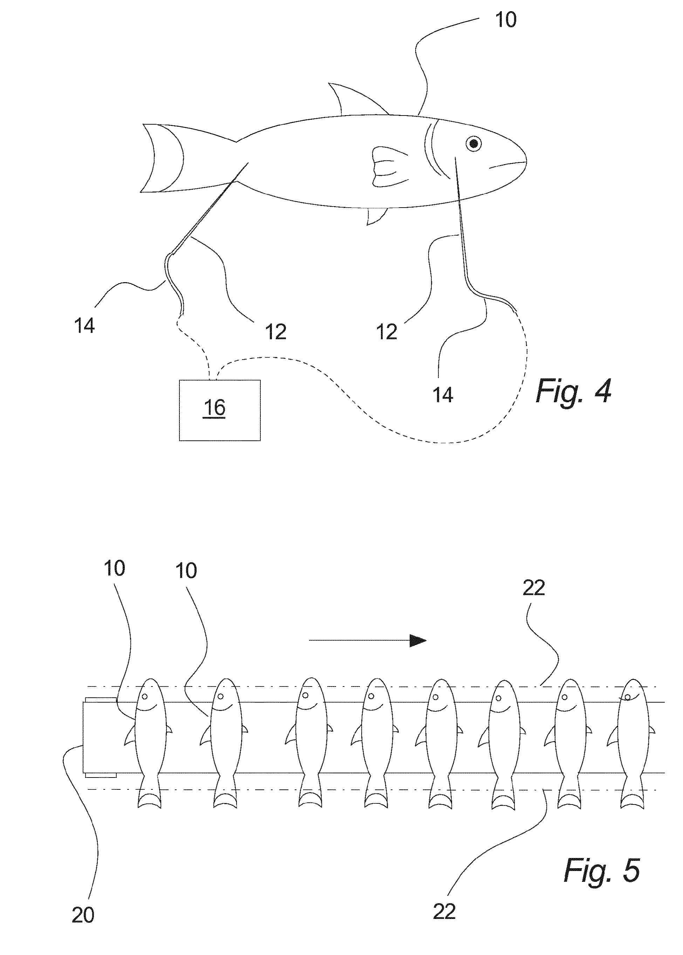

The electrical stimulation can be applied to the fish in various manners, of which a few examples shall be demonstrated in the following with reference to figs. 4 - 7b.

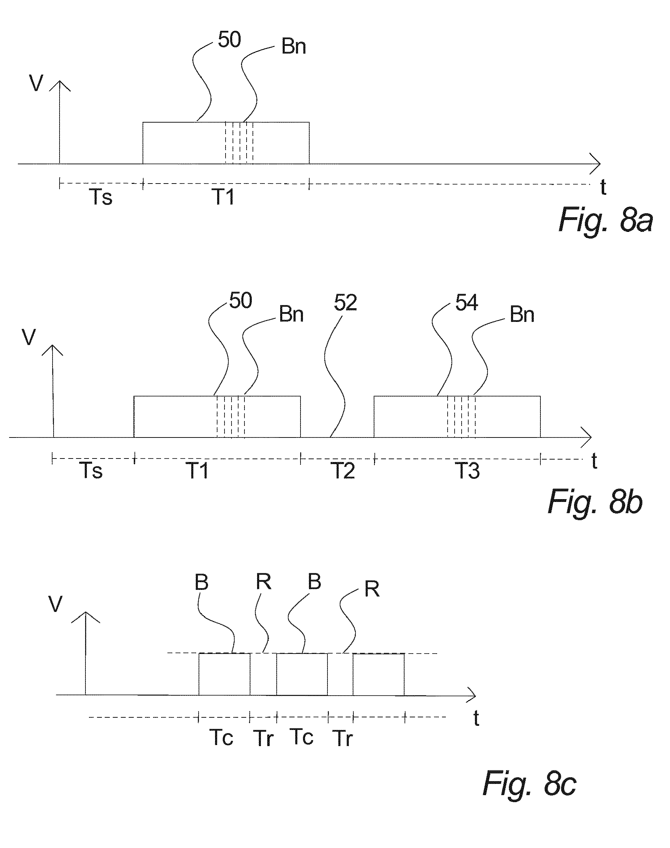

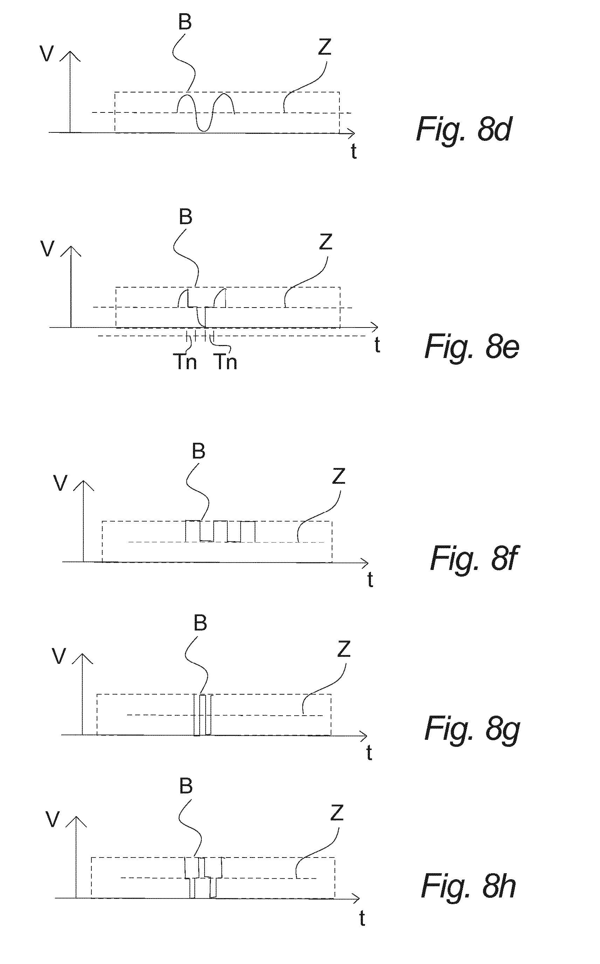

As shown in fig. 4, wherein a fish 10 is shown in a schematic manner, the electrical stimulation can be applied by means of at least two electrodes 12, which by means of electric wires 14 are connected to suitable electric power and/or control equipment 16 as also indicated in fig. 4, which electrodes 12 serve to apply an electrical stimulation across at least a part of the fish. This device 16 will generate the needed voltage, waveform, stimulation bursts and relaxation pauses as explained in figures 8a - 8h. The device 16 can adapt these parameters by measuring one or more animal or process related parameters (e.g. size, weight, length, volume, pH, speed, stiffness, color, etc.) upstream and/or downstream. The electrodes 12 may preferably be arranged to contact the fish at a tail part and at a head part of the fish and the electrodes may be configured for applying the electricity to the fish by just touching the fish, but it will be understood that the electrodes may be configured for penetrating the skin of the fish. Further, it will be understood that each of the electrodes may touch the fish at a single location only but that the electrodes instead may be in e.g. sliding contact with the fish. Other manners of applying the electricity may be used as well. For example, electrodes that are fixed to the fish or grip the fish, such as for example clamps or the like, may be used. It should also be mentioned that in addition to electrode contact to the head and the tail part other configurations may be used, e.g. on opposite sides of the fish, etc. Further, the electrical stimulation may be performed on gutted as well as fish that have not been gutted, and in instances where gutted fish are subjected to electrical stimulation, one (or more) electrodes may be placed inside the fish, for example near the dorsal vertebra and one or more electrodes may be placed on the side of the fish, e.g. one on each side, which electrodes may be oblong and placed along the fish in the longitudinal direction in order to stimulate in particular the part of the fish, where the pin-bones are placed. Further, other means of establishing an electrical contact may be applied such as for example water jet, etc. Even further, it will be apparent to a skilled person that the electrodes may be applied manually, even though an automated arrangement is preferable.

In fig. 5 an arrangement for applying electrical stimulation to a plurality of fish 10 is shown in a schematic manner seen from above, where a conveyor 20 is used for transporting the fish 10. Thus, this conveyor 20, e.g. a conveyor belt or the like, may be a conveyor that transports the slaughtered and possibly also gutted fish 10 from one process to another, while the electrical stimulation takes place, whereby the process of performing the electrical stimulation can be integrated in a normally used fish processing plant without extensive modifications. Thus, the conveyor 20 may transport fish from the slaughtering process to the gutting process, the conveyor 20 may transport fish from the gutting process to e.g. the grading process, the filleting process or another process, or another suitable configuration may be used. An electrode arrangement 22 may as schematically shown be placed at each side of the conveyor 20 in such a manner that the head and the tail part of each fish slide along each electrode 22 or in another manner contact the electrodes 22. The electrodes 22 may simply be placed along the sides of the conveyor 20, which has a smaller width than the length of the fish 10, the electrodes 22 may be located above the level of the conveyor and arranged to contact the fish 10, for example with flexible electrode parts, brushes or similar electrode parts (not shown). Thus, the length of the conveyor arrangement, e.g. the length of the electrode arrangements 22 in combination with the conveying speed will determine the total stimulation time for each fish 10, which total stimulation time may comprise one or more stimulation periods as will be explained later on.

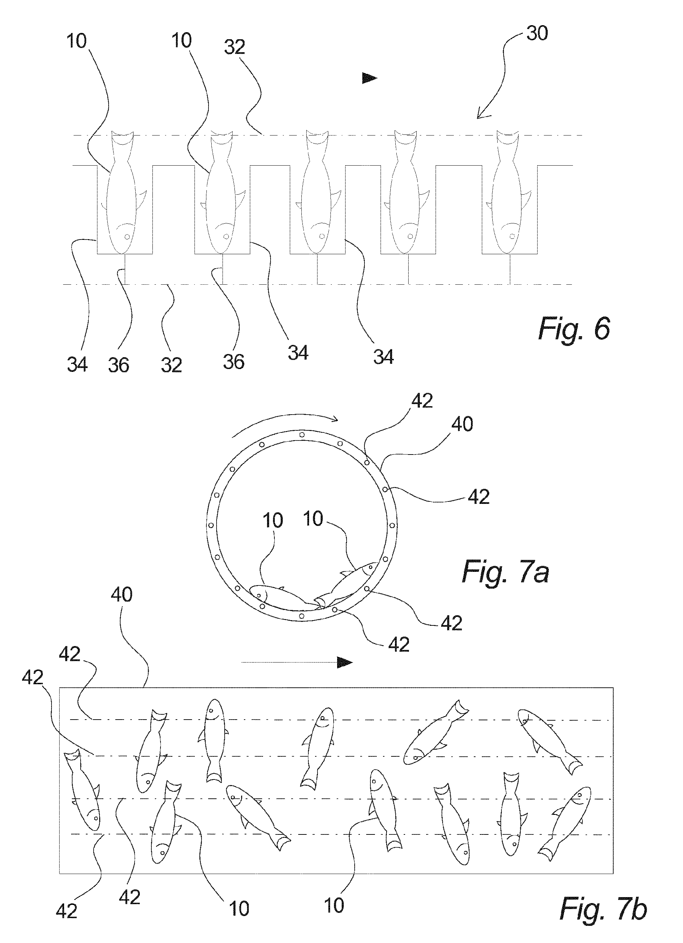

In order to create a stimulation /relaxation sequence in the stimulator signal, the electrodes may be either connected to the electric device 16 (not shown in figure 5) via the features shown and explained in figure 4, or configured to make alternating contact / no contact with the fish. A further embodiment of an arrangement for applying electrical stimulation to a plurality of fish 10 is shown schematically in a side view in fig. 6, where a conveying arrangement 30 is used for transporting the fish 10, where each fish 10 is placed preferably head down in a basket 34, e.g. a basket having an open structure. The baskets 34 are connected together and moving along a route, where at least a pair of electrode arrangements 32 are placed, one arranged for contacting e.g. the bottom of the baskets 34, for example via electrode parts 36, which connect to the electrode arrangement 32 in a sliding fashion. The electrode parts 36 may for example be flexible electrode parts, brushes or similar electrode parts. The other electrode arrangement 32 may be arranged as a rail at the top of the baskets 34 in order to contact the tail parts of the fish 10, for example by making sliding contact to the tail parts of the fish 10. Other means of establishing the contact to the fish may be used, for example by water jets for connecting the current. Such arrangements may also be used in connection with the other embodiments disclosed in connection with the invention, cf. e.g. fig. 5.

The length of the arrangement 30, e.g. the length of the electrode arrangements 32 in combination with the conveying speed will determine the total stimulation time for each fish 10 which total stimulation time may comprise one or more stimulation periods as will be explained later on.

The arrangement shown in fig. 6 may comprise one lane or several lanes placed side by side, which may also be the case for the arrangement shown in fig. 5.

In figs. 7a and 7b a further embodiment of an electrical stimulation arrangement according to the invention is shown, where in fig. 7a a tumbler 40 is shown seen from the end and where in fig. 7b a cut-out (and flattened) section from end-to-end of the lower part of such a tumbler 40 is shown together with the fish 10 currently occupying the tumbler. This arrangement may be combined with a cooling process that is performed, where the slaughtered fish is entered into the tumbler 40, which is filled e.g. 50% with water and where e.g. spiral (not shown) serves to move the fish from one end to the other. This embodiment can be placed either horizontal or under an angle; by changing the angle, the length of time that the fish spends in the drum (i.e. stimulation time), can be controlled.

As mentioned, fig. 7a shows such a modified tumbler 40 from the end, where it is shown that a plurality of electrode arrangements 42 are placed along the circumference inside the tumbler 40 with distances corresponding to the length from a tail part to a head part of a fish 10 or smaller. This modified tumbler 40 is as mentioned shown in a schematic manner seen from above in fig. 7b, where a few of the electrode arrangements 42 are shown, and where it is seen that while being moved from one end of the tumbler 40 to the other, the fish 10 will be lying on the electrode arrangements, e.g. lying on two electrodes for a while, until being turned or tumbled by the movement of the tumbler 40 to be lying on a consecutive pair of electrodes, etc. until the fish reaches the outlet end of the tumbler 40. It will be apparent to a skilled person that the electrodes 42 may preferably be arranged with alternating polarity, e.g. with half of the electrodes connected together and the others connected together to provide the electrical stimulation of the fish.

Examples of electrical stimulation forms will be explained in the following with reference to figs. 8a and 8b.

In fig. 8a it is shown that a period of time Tₛ after slaughtering the fish it is subjected to electrical stimulation for a period of time T₁, which electrical stimulation may be applied according to one of the embodiments described above or according to another suitable embodiment within the present invention.

The electrical stimulation time period T₁ may be within the range of 10 seconds to 120 seconds (or even more) for example app. 90 seconds.

The V axis in figs. 8a and 8b indicates whether an electrical stimulation indicated by 50 and 54 is applied or not and the detailed structure of the electrical stimulation will be explained below.

Further, as shown in fig. 8b, the electrical stimulation time period T₁ may be followed by a rest period T₂, indicated by 52, which again is followed by a second electrical stimulation time period T₃, indicated by 54. The time period T₂ may be within the range of 10 seconds to 300 seconds or even more or even less, and the second electrical stimulation time period T₃ may as the first electrical stimulation period be within the range of 10 seconds to 120 seconds (or even more), for example app. 60 seconds.

Not shown in the figures is a possible third and fourth stimulation time period T5 and T7 after respectively a rest period T4 and T6, etc.

As further indicated in fig. 8a and 8b, the stimulation periods 50 and 54 comprises a plurality of stimulation bursts, which are referred to as Bn, which will be explained with reference to figs. 8c - 8h.

Fig. 8c shows in a time enhanced view, e.g. a magnification along the time line t, examples of a number of bursts B in the stimulation period T1, where the axis V indicates whether the stimulation current is in contact with the muscle or not, meaning that during the bursts B stimulation voltage is applied to the fish. During the electrical stimulation applied in the time period T1 and T3, T5, T7 the muscles are repetitively stimulated to generate a muscle contraction for a time period Tc (a burst B) followed by a muscle relaxation period Tr (R). The biochemical energy will be most efficiently depleted by alternating muscle contraction with relaxation. Anatomically, most skeletal muscles are arranged in pairs, one muscle to stretch, one to lift. During the relaxation period the antagonistic muscle will deplete some energy. The time period Tc may be within the range of 0.2 to 2 seconds for example 0.5 sec and the time period Tr may be within the range of 0.2 to 2 seconds for example 1 sec. Tc and Tr can be the same in T1, T3, T5, T7 or they can be different.

Fig. 8d shows in a further time enhanced view, e.g. a magnification along the time line t an example of the applied voltage signal in a burst B in the stimulation period T1 (or T3, etc), where as shown the electrical stimulation applied in the time period Tc may be an alternating voltage applied to the fish, which alternating voltage may have a magnitude in the interval of 10V to 250V, for example app. 100V and a frequency f within the range of 10Hz to 1kHz, for example 50Hz. The alternating voltage can have a sinusoid shape or an adapted alternating current, possibly with intermediate rest zero periods Tn as shown in fig. 8e.

Instead, the electrical stimulation applied in the time periods T₁...T7 may be a pulsed DC voltage applied to the fish, e.g. with pulses of alternating polarities being applied to the fish, possibly with intermediate rest zero periods as also indicated in figs. 8f - 8h. It is noted that in figs. 8d - 8h a zero voltage level line Z is shown in order to illustrate that the applied signal in the bursts B may be symmetrical in relation to the zero voltage line Z and/or that pulses of only one polarity may be applied as shown in fig. 8f. Furthermore, a bias voltage may be involved.

It will be apparent to a skilled person that other signal forms, voltages, frequencies, time periods etc. than exemplified above may be used.

The ideal combination of signal forms, voltage, frequencies and burst pauses, will give the quickest depletion of the energy without super-contracting the muscles and will give an energy depletion in such a way that later on in the process the regeneration of energy will be minimized. Regeneration of energy between stimulation and deboning makes deboning not as easy and the pH drop will be less quick.

Super-contraction can damage muscle fibers. Such damages would have the same negative effect on the muscle tenderness and/or the deboning efficiency, as a too early deboning would.

The ideal combination of the above mentioned parameters, depends upon the type of fish, amount of stress applied before and during slaughtering, the elapsed time between slaughter and stimulation, the number of stimulations, the practical execution of the stimulator and the chilling method.

The lowest voltage can be applied in installations with direct contact of the electrodes into the muscle, while higher voltages are required for devices with sliding contact on the skin of partially dry fish.

A skilled person will find the ideal combination via try and error, by measuring energy related parameters as e.g. ATP (Adenosine Tri Phosphate), AMP (Adenosine Mono Phosphate), glycogen, lactic acid or pH in the muscle, either during the process of stimulation or during the following further processing, or both.

In order to enhance the proteolitic break-down of the proteins between bones and muscles, it may be preferable to appropriately adapt the chilling method. This is because the speed of proteins break-down at 4°C is three times faster than at 0°C (i.e. the temperature of ice melting, that is usually selected for chilling fish). After gutting, before bone removing, the fish will be chilled in a way that its skin temperature will drop rather quickly to below 2°C and the core temperature will stay above 4°C until after deboning. This chilling method can be achieved via the utilization of chilled water, cold air / water spray combinations or humid air blast between gutting and deboning.

According to an example, which will also be referred to as example 1 in the following, the electrical stimulation can be applied in the form of AC voltages with e.g. a 50 Hz frequency, where electrical stimulation was applied for six stimulation periods (T), each having a duration of 1 minute, thus giving a total treatment time of 6 minutes. For each of these stimulation periods (T) burst periods (Tc) of 0.5 seconds were applied with relaxation periods (Tr) of 1 second. The voltage was increased for the six stimulation periods (T), with the six RMS values being 20V, 50V, 100V, 150V, 200V and 250V, respectively.

According to a further example, which will also be referred to as example 2 in the following, the electrical stimulation was also applied in the form of AC voltages with e.g. a 50 Hz frequency, but where the electrical stimulation was applied for two stimulation periods (T), each having a duration of 5 minutes, thus giving a total treatment time of 10 minutes. For each of these two stimulation periods (T) burst periods (Tc) of 0.5 seconds were applied with relaxation periods (Tr) of 2 seconds. The RMS voltage values for the two stimulation periods (T) were 200V and 250V.

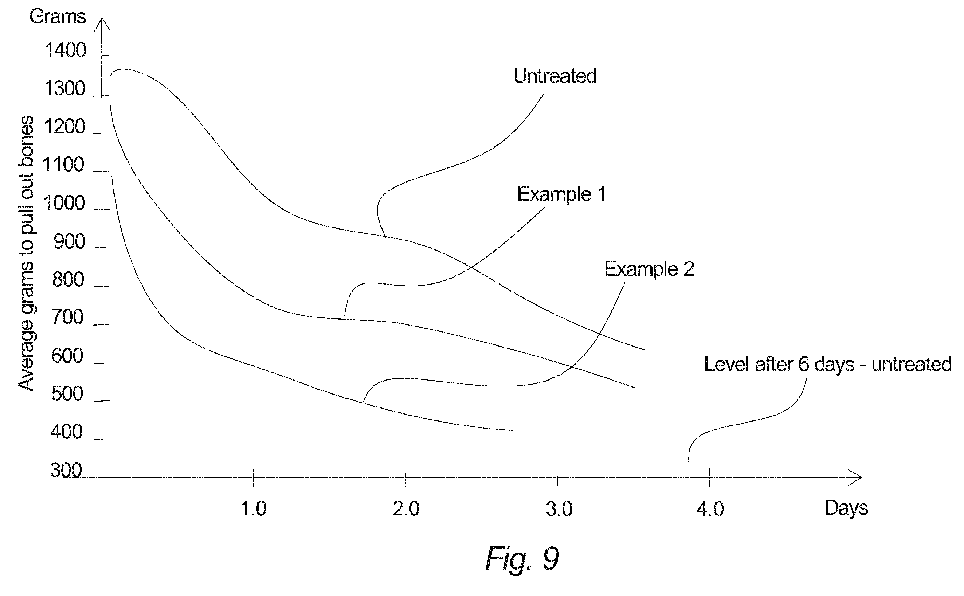

The impacts of treatments according to these two examples are illustrated in fig. 9, wherein qualitative results for average pull-out forces for salmon pin-bones are indicated, although comprising only a relatively limited number of fish. The average pull-out forces are indicated in grams by these curves, where three set of fish have been used for the measurements, and where a first set of fish has been used as a reference (untreated), a second set of fish has been subjected to a treatment as described by example 1 and a third set of fish has been subjected to a treatment as described by example 2. Each fish was filleted and six pin-bones, evenly distributed along the fillet, have been pulled out of each fillet each time a test was performed during the test period, the pull-out force was measured and average values were calculated. The testing was performed over a period of approximately four days, starting immediately after the fish were slaughtered.

In fig. 9 the average level for the pin-bone pull-out force for untreated salmon that are left for 6 days after killing before removing the pin-bones are shown by the short-dash line. The average pin-bone pull-out force for untreated salmon is shown by the curve marked "Untreated". In connection herewith it is noted that according to the prior art documents the pin-bones can usually be removed two to three days after the fish have been slaughtered.

The corresponding curves marked "Example 1" and "Example 2"show in a similar manner the pin-bone pull-out forces for the sets of fish (salmons) that have been treated according to example 1 and example 2, respectively. As indicated, the results show a substantive reduction in the necessary pull-out force for the treated fish. When taking into account that it is usually deemed necessary to wait for two to three days after slaughtering/killing before removing pin-bones from untreated salmon in order to achieve a satisfactory result, e.g. with a minimum of broken pin-bones and a minimum of removed meat, it can be understood that pin-bones can be removed from the fish treated according to example 1 and example 2 relatively quickly after slaughtering, e.g. approximately 6 hours after slaughtering, since the average pull-out force here corresponds essentially to the average pull-out force for untreated fish after two to three days, and since the tendency of the pin-bones to break and the tendency that meat is removed with the pin-bones is dependent on the necessary pull-out force.

Above, the invention has been explained with reference to specific embodiments and with reference to the drawings, but it will be apparent to a person skilled within the art that the method according to the invention can be carried out in an infinite number of ways and within a wide range of variations within the scope of the appended claims.

## Claims

1. Method of processing of fish, said method comprising the steps of
- providing a live fish,
- stunning the fish,
- slaughtering the fish subsequent to the stunning of the fish,
- subjecting the slaughtered fish or part of the slaughtered fish to an electrical stimulation prior to at least a further processing step of the slaughtered fish or part of the slaughtered fish, and
- wherein said at least one further processing step comprises the step of removing pin-bones from the slaughtered fish or part of the slaughtered fish.

2. Method according to claim 1, wherein stunning the fish is performed by means of letting the fish stay in water with CO2 content.

3. Method according to claim 2, wherein the fish is in the water for about ½ hour.

4. Method according to claim 1, wherein stunning the fish is performed by means of electrical stunning.

5. Method according to claim 1, wherein stunning the fish is performed by means of a mechanical stunning.

6. Method according to claim 5, wherein the mechanical stunning is performed by means of subjecting the fish to a blow on the head.

7. Method according to any of claims 1 to 6, wherein said step of subjecting the fish to an electrical stimulation comprises the use of one or more electrodes for applying the electrical stimulation to part of the slaughtered fish, e.g. a fish fillet.

8. Method according to claim 7, wherein said step of subjecting the part of the slaughtered fish to an electrical stimulation comprises the application of an electrical voltage (V) having a predetermined amplitude, frequency and/or form for one or more stimulation periods (T1, T3).

9. Method according to claim 8, wherein said one or more stimulation periods (T1, T3) each involves a plurality of burst stimulations (B) applied to the part of the slaughtered fish.

10. Method according to claim 8 or 9, wherein said electrical voltage (V) applied to the part of the slaughtered fish comprises an alternating voltage.

11. Method according to claim 8 or 9, wherein said electrical voltage (V) applied to the part of the slaughtered fish comprises a pulsed DV voltage.

12. Method of processing of fish, said method comprising the steps of
- providing a live fish,
- slaughtering the fish,
- subjecting the fish or part of the fish to an electrical stimulation prior to at least a further processing step of the fish or part of the fish, wherein said step of subjecting the fish or part of the fish to an electrical stimulation comprises the use of one or more electrodes for applying a pulsed electrical stimulation to a part of the fish, and
- wherein said at least one further processing step comprises the step of removing pin-bones from the part of the fish.

13. Method according to claim 12, wherein said step of subjecting the part of the fish to a pulsed electrical stimulation comprises the application of an electrical voltage (V) having a predetermined amplitude, frequency and/or form for one or more stimulation periods (T1, T3).

14. Method according to claim 13, wherein said one or more stimulation periods (T1, T3) each involves a plurality of burst stimulations (B) applied to the part of the fish.

15. Method according to claim 13 or 14, wherein said electrical voltage (V) applied to the part of the fish comprises an alternating voltage or a DC voltage.
